# EUROPEAN PATENT APPLICATION

(11) **EP 3 690 784 A1**
(43) Date of publication of application: **05.08.2020**
(21) Application number: 18849419.9
(22) Date of filing: 31.08.2018
(51) Int. Cl.: G06Q 30/02

(54) **METHOD, SERVER AND SYSTEM FOR FEEDING BACK TAG OF FILE TAGGED BY USER**

(30) Priority: 30.09.2017 CN 201710919334
(71) Applicant: BOE Technology Group Co., Ltd., Beijing 100015 (CN)
(72) Inventor: DONG, Wenchu, Beijing 100176 (CN); ZHANG, Honglei, Beijing 100176 (CN)
(74) Representative: Brötz, Helmut
(86) International application number: PCT/CN2018/103588
(87) International publication number: WO 2019/062473

(57) **Abstract**

There is provided in the present disclosure a server for providing feedback on a user's mark on a file, including: a transmitter (210), configured to transmit a file to be marked to a terminal of the user in response to a command for requesting the file by the user; a receiver (220), configured to receive a marked result of the user from the terminal; and a processor (230), configured to provide feedback on accuracy of the marked result of the user according to a reference factor; wherein the file is marked by the user based on at least one evaluation item, and the marked result includes a marked value corresponding to each of the at least one evaluation item.

## Description

The present application claims the priority of a Chinese patent application No. 201710919334.2 filed on September 30, 2017, with an invention title of "ESTIMATION METHOD, ESTIMATION SERVER AND ESTIMATION SYSTEM FOR ART APPRICATION ABILITY". Herein, the content disclosed by the Chinese patent application is incorporated in full by reference as a part of the present application.

### TECHNICAL FIELD

The present disclosure relates to a field of art appreciation, in particular to a method, a server and a system for providing feedback on a user's mark on a file.

### BACKGROUND

As the market of art is boosting and people's requirement for interest and taste on artworks increases, the requirement for appreciation ability, evaluation/market assessment ability in artworks (for example, painting work) becomes more and more popular. Currently, methods used by the people for enhancing the art appreciation ability mainly include school learning, practice (for example, behaviors of purchase and sale) to accumulate experience, on-site visiting and learning (for example, going to a museum to view and learn), and so on and so forth.

However, for people limited by conditions and resources, the above methods are not applicable. Therefore, how to provide a convenient method for enhancing the art appreciation ability becomes a technical problem urgently to be solved in the art.

### SUMMARY

Therefore is provided in one aspect of the present disclosure a server for providing feedback on a user's mark on a file, comprising: a transmitter, configured to transmit a file to be marked to a terminal of the user in response to a command for requesting the file by the user; a receiver, configured to receive a marked result of the user from the terminal; and a processor, configured to provide feedback on accuracy of the marked result of the user according to a reference factor; wherein the file is marked by the user based on at least one evaluation item, and the marked result includes a marked value corresponding to each of the at least one evaluation item.

There is provided in another aspect of the present disclosure a method for providing feedback on a user's mark on a file, comprising: transmitting a file to be marked to a terminal of the user in response to a command for requesting the file by the user; receiving a marked result of the user from the terminal; and provide feedback on accuracy of the marked result of the user according to a reference factor; wherein the file is marked by the user based on at least one evaluation item, and the marked result includes a marked value corresponding to each of the at least one evaluation item.

There is provided in another aspect of the present disclosure a system for providing feedback on a user's mark on a file. The system comprises the server as described above and a user terminal configured to communicate with the server, wherein the user terminal is configured to request a file to be marked from the server, transmit a marked file to the server after the user completes marking, and receive a feedback result on the marked file from the server.

### BRIEF DESCRIPTION OF THE DRAWINGS

By describing embodiments of the present disclosure in detail by combining with accompanying figures, the above and other purposes, characteristics and advantages of the present disclosure will become more clear, wherein same reference marks refer to units having a same structure, and wherein:

The accompanying figures are used to provide further understanding of the present disclosure, form a part of the specification, and are used to explain the present disclosure together with specific implementations described below, but they do not form a limitation to the present disclosure. In the figures:
Fig.1 shows a flow diagram of a method for providing feedback on a user's mark on a file according to an embodiment of the present disclosure;
Fig.2 shows a modular schematic diagram of a server for providing feedback on a user's mark on a file according to an embodiment of the present disclosure.
Fig.3 shows a structure schematic diagram of a system for providing feedback on a user's mark on a file according to an embodiment of the present disclosure.

### DETAILED DESCRIPTION

Specific implementations of the present disclosure will be described in detail by combining with accompanying figures. It shall be understood that the specific implementations described herein are just used to describe and explain the present disclosure, but are not used to limit the present disclosure.

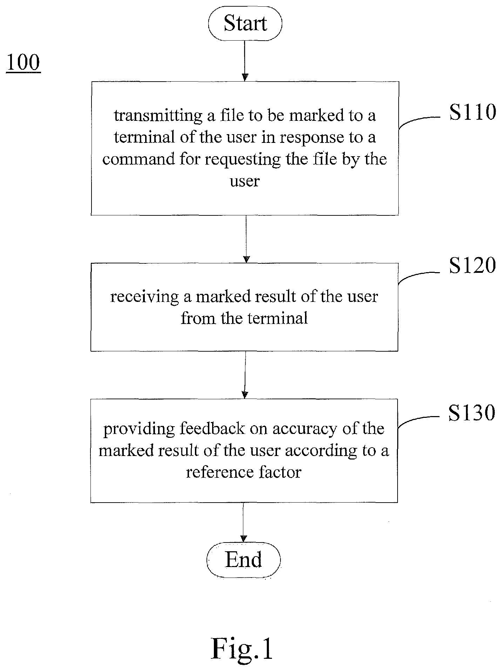

As shown in Fig.1, according to one aspect of the present disclosure, there is provided a method 100 for providing feedback on a user's mark on a file. The method 100 may be performed for example by a server. This server is configured to communicate with a terminal of a user. The method 100 comprises:
in step S110, in response to a command for requesting a file by a user, transmitting the file to be marked to the terminal of the user;
in step S120, receiving a marked result of the user from the terminal;
in step S130, providing feedback on accuracy of the marked result of the user according to a reference factor.

In the embodiment of the present disclosure, after the terminal of the user receives the file to be marked from the server, the user marks the file based on at least one evaluation item. The marked result includes marked values corresponding to each of the at least one evaluation item.

Exemplarily, the method 100 for providing feedback on the user's mark on the file can be applicable to the field of art appreciation. In particular, the file may be an electronic carrier of an artwork. Further, the file to be marked may be an electronic carrier of an artwork to be marked by the user. The electronic carrier of the artwork to be marked may be an electronic carrier of an artwork that has been stored in the server. The user refers to an art appreciator who needs to enhance his/her ability of art appreciation by practicing in appreciating artworks. The artworks represented by the electronic carriers have been appreciated in advance, in order to be used by the appreciator for practicing.

In particular, for example, if the user (i.e., the appreciator) requests to learn appreciating an artwork at the terminal, then the terminal may transmit a command for requesting a file to the server. The server may transmit the file to be marked (i.e., the electronic carrier of the artwork to be marked) in response to the command for requesting the file. After that, the user shows his/her appreciation level for the artwork by adding marks in the file to be marked on the terminal, and transmits the marked result (i.e., appreciation result) to the server through the terminal. After receiving the marked result, the server may provide feedback on accuracy of the marked result of the user according to the reference factor, i.e., providing feedback on the user's appreciation level for the artwork. Herein, the accuracy of the marked result may be for example a score of the user's appreciation level. The method 100 realizes the process that the appreciator learns to appreciate one piece of artwork. It should be noted that the appreciator may continue learning through the method 100 in a manner of appreciating other artworks according to his/her appreciation level, so as to enhance his/her appreciation level. Since the appreciator appreciates the artwork by means of the electronic carrier, the appreciator can still appreciate the artwork without viewing any real-world object. Also, in the present disclosure, an appreciation result of the appreciator can be scored and evaluated remotely, so that the appreciator is able to know his/her appreciation level. That is to say, in a case of being not faced with relevant experts, the appreciator is still able to recognize his/her appreciation level objectively, so as to decide whether to further learn or not. In other words, the appreciator can conveniently enhance his/her appreciation level by using the method 100. The appreciator can know at which level his/her appreciation ability of the artwork is according to his/her appreciation ability score. If the appreciation ability score is too low, the appreciator may appreciate more artworks, so as to enhance his/her appreciation ability gradually.

It shall be noted that the process of learning and appreciating the artwork is just an illustrative example of the present disclosure, but not a limitative example. The present disclosure does not limited thereto.

The present disclosure does not make any special definition to the type of the electronic carrier, for example, the electronic carrier of the artwork to be marked includes a picture and/or a video. Of course, if the artwork is a music work, then the electronic carrier may further include an audio.

According to the embodiment of the present disclosure, the reference factor may include at least one of market price of the artwork to be marked, and expert score for the marked result of the user.

In particular, for example, when the file to be marked is the electronic carrier of the artwork to be marked, the expert score for the marked result of the user refers to scoring, by the expert, the user's appreciation result of the artwork which is reflected by the user's marked result. In one example, when the reference factor comprises the expert's score for the marked result, the server performing the method 100 may transmit the marked result to a scoring terminal of the expert. The expert may score the marked result of the user (i.e., the appreciation result of the appreciator), and transmit the score for the marked result to the server through the scoring terminal. After that, in step S130, the accuracy of the marked result of the user is calculated according to the expert score, so as to provide feedback on the user's appreciation level for the artwork to the user.

In another example, the reference factor may comprise only the market price. In this case, at least one evaluation item can comprise valuation for the artwork to be marked. Correspondingly, the marked result of the user may comprise a marked value corresponding to the valuation. In step S130, the market price may be compared to the valuation, and the marked result of the user is scored based on a difference between the market price and the valuation. For example, when the difference is small, the marked result of the user would have a relatively high accuracy, and then the score is a high score, that is, the appreciation level is relatively high; when the difference is large, the marked result of the user would have a relatively low accuracy, and then the score is a low score, that is, the appreciation level is relatively low.

In another example, in order to provide a score for the appreciation level of the user more objectively and accurately, the reference factor may comprise, for example, the market price of the artwork to be marked as well as the expert score for the marked result. In one embodiment, when the accuracy of the marked result of the user is calculated, the market price and the expert score for the marked result may be weighted. For example, the market price and the expert score may have a same weight or different weights respectively.

The embodiment of the present disclosure does not make any special limitation to the type of the artwork to be marked. The artwork to be marked may be a ceramic work, an embroidery work, a calligraphy work, a painting work, etc.

For example, the painting work is a planar work. The picture (i.e., electronic carrier) of the painting work can be displayed in a planar manner on a terminal display device. When the painting work is displayed, its information loss is minimal. Therefore, the painting work is particularly applicable to the method 100 provided in the present disclosure. That is, the artwork to be marked is a painting work. In this case, for example, the at least one evaluation item can comprise at least one of painting color usage and painting brush stroke delicateness. Correspondingly, the marked value(s) corresponding to the evaluation item(s) may comprise at least one of a first marked value representing the painting color usage and a second marked value representing the painting brush stroke delicateness.

Correspondingly, the reference factor may comprise at least the expert score. The expert score may comprise at least one of a first evaluation score corresponding to the first marked value representing the painting color usage, and a second evaluation score corresponding to the second marked value representing the painting brush stroke delicateness. In one example, at least one evaluation item of the user comprises the painting color usage but not the painting brush stroke delicateness, thus the expert score comprises the first evaluation score corresponding to the first marked value representing the painting color usage. In another example, the at least one evaluation item of the user comprises the painting brush stroke delicateness but not the painting color usage, thus the expert score comprises the second evaluation score corresponding to the second marked value representing the painting brush stroke delicateness. In another example, the at least one evaluation item of the user comprises both the painting color usage and the painting brush stroke delicateness, thus the expert score comprises both the first evaluation score and the second evaluation score.

According to the embodiment of the present disclosure, in order to further enhance the appreciation ability of the appreciator, the method 100 may further comprise following steps performed prior to the step S110:
removing a prompting information in an electronic carrier of an initial artwork, so as to obtain the electronic carrier of the artwork to be marked, and transmitting the electronic carrier of the artwork to be marked to the terminal, wherein the prompting information comprises at least author information of the initial artwork.

There would always be a signature of the artist (i.e., the author information) in an artwork on the market. When the appreciator is appreciating the artwork, if the appreciator sees the signature of the artist, then he/she would appreciate and evaluate the artwork according to the reputation of the artist, and thus affecting objectiveness of appreciation for the artwork, and it cannot reflect a real appreciation ability of the appreciator. In the method 100 provided in the present disclosure, the initial artwork is an artwork available on the market. Since the signature of the artist is removed, the reputation of the artist would not affect judgment and evaluation of the appreciator. Therefore, the appreciation result can reflect the real appreciation level of the appreciator.

According to the embodiment of the present disclosure, the reference factor may further comprise a system score. In this case, the method 100, for example, prior to the step S130, further comprises:
obtaining an identifying information in the electronic carrier of the artwork to be marked;
determining a reference artwork of the same type as the artwork to be marked according to the identifying information, wherein each of the at least one evaluation item of the reference artwork has a predetermined reference value;
scoring the marked value(s) of the artwork to be marked according to the predetermined reference value(s) of the reference artwork, and obtaining the system score.

It should be noted that the relative step of obtaining the system score herein can be used separately. That is, when any artwork is expected to be evaluated by the system, an electronic carrier of the artwork is firstly acquired (i.e., a picture being taken on the artwork and/or a video being recorded for the artwork), and then the electronic carrier of the artwork is upload to the server that performs the method 100, for performing at the server the relative step of obtaining the system score. This step is applicable to a scenario where no expert is at the scene while the user wants to appreciate the artwork on hands.

According to the embodiment of the present disclosure, the reference artwork has been scored by the expert and/or has been priced on the market. In other words, each of the at least one evaluation item (for example, including market price and/or expert score) of the reference artwork has a predetermined reference value. Therefore, by comparing the artwork to be marked with the reference artwork, a relationship between the artistic level of the artwork to be marked and the artistic level of the reference artwork can be obtained. The system score is a score representing the artistic level of the artwork to be marked.

The present disclosure does not make any special limitation to the content of the identifying information, for example, the identifying information may include at least one of an author name, a classification of work category, a style classification of work, and analysis of work content.

For example, there is usually a signature in the artwork, and the name of the author can be obtained by identifying the signature of the artwork to be marked. After the author of the artwork to be marked has been known, the expert(s)'s consistent score for the works of the author can be obtained.

The classification of work category can be obtained by analyzing content of an artwork. For example, by identifying the color and graphic outline of the artwork to be marked, it may be known whether the artwork belongs to a calligraphy work or a painting work. The style classification of the artwork to be marked can be obtained by identifying the graphic outline of the work. For example, if the work is a calligraphy work, then it may be determined to which style (running script, regular script, official script, cursive script) the work belongs according to the graphic outline.

When the artwork is a painting work, the analysis of work content comprises for example at least one of brush stroke delicateness, the number and types of colors, and color usage type determined by chromatic values.

In the present disclosure, the system score of the initial artwork can be obtained by analyzing and comparing the work contents of the artwork to be marked and the reference artwork.

The present disclosure does not make any special limitation to the reference artwork, for example, the reference artwork being stored in the local repository, or the reference artwork being obtained remotely. When the reference artwork does not exist in the local repository, the reference artwork may be obtained remotely.

According to the above method 100, a user only needs to mark a file at a terminal, and uploads his/her marked result to a server through the terminal and network. Then, the server determines accuracy of the marked result of the user, and feedbacks it to the user. For example, in the case of applying the method 100 to artwork appreciation field, an appreciator only needs to appreciate an electronic carrier of an artwork at the terminal, and uploads his/her appreciation result to the server through the terminal and network. Then, the server determines accuracy of the appreciation result of the appreciator, and feedbacks it to the appreciator, so that the appreciator can know his/her appreciation level, without going to some sites (for example, school, museum, etc.) to appreciate the real-world objects. Therefore, the method provided in the present disclosure is more convenient, and is suitable for those persons who are unable to appreciate the real-world objects to enhance his/her art appreciation level.

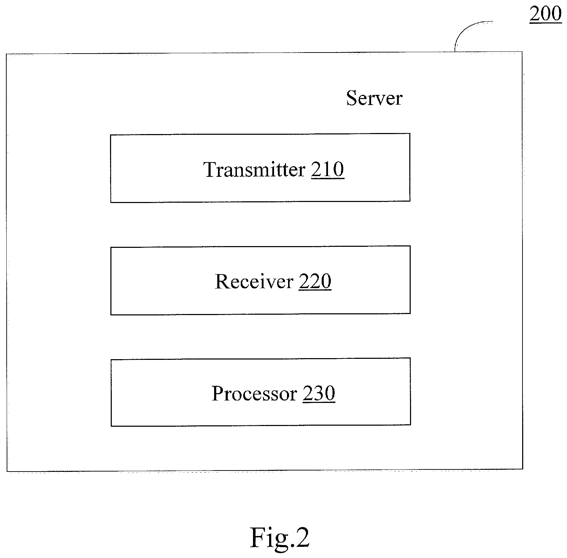

As a second aspect of the present disclosure, there is provided a server 200 for providing feedback on a user's mark on a file. Herein, as shown in Fig.2, the server 200 comprises a transmitter 210, a receiver 220 and a processor 230.

The transmitter 210 is configured to perform the step S110, i.e., transmitting a file to be marked to the terminal of the user in response to a command for requesting the file by the user.

The receiver 220 is configured to perform the step S120, i.e., receiving the marked result of the user from the terminal.

The processor 230 is configured to perform the step S130, i.e., providing feedback on accuracy of the marked result of the user according to the reference factor.

In the embodiment of the present disclosure, after the terminal of the user receives the file to be marked from the server 200, the user marks the file based on at least one evaluation item, wherein the marked result comprises a marked value corresponding to each of at least one evaluation item. Exemplarily, the file may be the electronic carrier of the artwork. Further, the file to be marked may be the electronic carrier of the artwork to be marked. The electronic carrier of the artwork to be marked can be the electronic carrier of the artwork stored in the server 200. Herein, the user refers to an art appreciator who needs to enhance his/her art appreciation ability by practicing in appreciating artworks. The artwork represented by the electronic carrier has been appreciated in advance, and is used by the appreciator for practicing.

In particular, for example, if the user (i.e., the appreciator) requests to learn appreciating an artwork at a terminal, then the terminal transmits a command for requesting a file to the receiver 220 of the server 200 in a wired or wireless manner. The server 200 transmits, by the transmitter 210, the file to be marked (i.e., the electronic carrier of the artwork to be marked) to the terminal in a wired or wireless manner in response to the command for requesting the file. After that, the user shows his/her appreciation level for the artwork by adding mark(s) in the file to be marked through the terminal, and transmits the marked result (i.e., appreciation result) to the receiver of the server 200 through the terminal. After receiving the marked result, the server 200 provides, by the processor 230, feedback on accuracy of the marked result of the user according to reference factor, i.e., providing feedback on the user's appreciation level for the artwork. Herein, the accuracy of the marked result may be for example a score for the appreciation level of the user.

The server 200 for providing feedback on the user's mark on the file provided in the present disclosure can be used to perform the method 100 provided in the present disclosure. Since the beneficial effects of the method have been described in detail in the above, no further details are given herein.

According to the embodiment of the present disclosure, the reference factor comprises the system score. In this case, the processor 230 is further configured to: extract identifying information in the electronic carrier of the artwork to be marked; determine a reference artwork of the same type as the artwork to be marked according to the identifying information, wherein the at least one evaluation item of the reference artwork has a predetermined reference value; score the marked value of the artwork to be marked according to the reference value of the reference artwork, and obtain the system score.

According to the embodiment of the present disclosure, the identifying information includes at least one of an author name, a classification of work category, a classification of work style, and analysis of work content.

According to the embodiment of the present disclosure, the artwork to be marked and the reference artwork are painting works. And the analysis of work content comprises at least one of brush stroke delicateness, the number and types of colors, and color usage type determined by chromatic values.

The present disclosure does not make any special limitation to how to obtain the electronic carrier of the reference artwork. The electronic carrier of the reference artwork can be stored in the local repository; or the reference artwork can be obtained from a remote cloud. In the latter case, the server 200 obtains the electronic carrier of the reference artwork through the receiver 220.

According to the embodiment of the present disclosure, the reference factor comprises at least one of market price of the artwork to be marked and expert score for the marked result.

According to the embodiment of the present disclosure, the artwork is a painting work, and when the reference factor comprises at least the expert score for the marked result, the at least one evaluation item comprises at least one of painting color usage and painting brush stroke delicateness. The marked value comprises at least one of a first marked value corresponding to the painting color usage and a second marked value corresponding to the painting brush stroke delicateness, and the expert score comprises at least one of a first evaluation score corresponding to the first marked value and a second evaluation score corresponding to the second marked value.

According to the embodiment of the present disclosure, the processor 230 is further configured to: weight the market price and the expert score of the artwork to be marked when the reference factor comprises both the market price and the expert score of the artwork to be marked, so as to determine accuracy of the marked result of the user.

According to the embodiment of the present disclosure, the processor 230 is further configured to: remove prompting information in the electronic carrier of an initial artwork, so as to obtain the electronic carrier of the artwork to be marked, and provide the electronic carrier of the artwork to be marked to the transmitter, wherein the prompting information comprises at least author information of the initial artwork. The present disclosure does not make any special requirement on how to obtain the electronic carrier of the initial artwork. For example, original and creative artworks uploaded by artists can be obtained regularly by signing with the artists.

According to the embodiments of the present disclosure, the electronic carrier of the artworks comprises a picture and/or a video for the artwork.

In addition, in order to make it convenient to manage users and to provide better services for the users, for example, the server 200 further comprises a user information storing module configured to store at least one of identity, appreciation time, appreciation evaluation item(s), and appreciation result(s) of the user. The current appreciation level of the user can be determined according to the information stored in the user information storing module, so that it is convenient to provide the user with follow-up artworks to be marked which are beneficial to enhance the appreciation level.

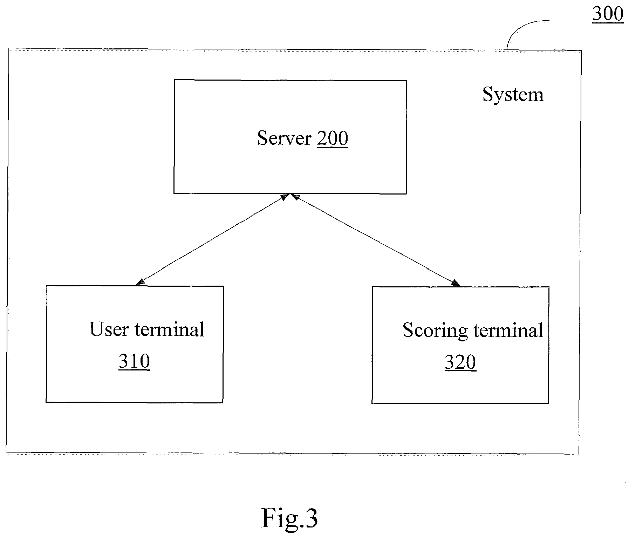

As a third aspect of the present disclosure, there is provided a system for providing feedback on the user's mark on the file. As shown in Fig.3, the system comprises the server 200 provided in the present disclosure.

In addition, the system further comprises a user terminal 310. For example, the user terminal 310 can be any one of terminal devices such as desktop computer, laptop computer, mobile phone, tablet computer, etc. The user terminal 310 is configured to communicate with the server 200. In particular, the user terminal 310 requests the file to be marked from the server 200. After having completed marking, the user transmits a marked file to the server 200, and receives the feedback result for the marked file from the server 200.

According to the embodiment of the present disclosure, the reference factor comprises the expert score. The evaluation system further includes a scoring terminal 320. The scoring terminal 320 is used to transmit the expert score to the server 200 by the expert. The scoring terminal 320 of the expert may be any one of terminal devices such as desktop computer, laptop computer, mobile phone, tablet computer, etc.

The present disclosure can be implemented by a software, a hardware, or a software cooperated with a hardware. Each functional block used in the description of each embodiment can be realized by a LDI serving as an integrated circuit, and each process described in each embodiment can be controlled by the LSI. They can be formed as chips separately, or can be formed as one chip so as to include a part or all of the functional blocks. They can comprise data input and output coupled thereto. According to difference of density of integration, the LSI herein can be called as IC, system LSI, ultra-LSI or super-LSI. However, the technique implementing the integrated circuit is not limited to LSI, and can be realized by using a private circuit or a general processor. In addition, FPGA (Field Programmable Gaye Array) programmed after the LSI is manufactured or a reconfigurable processor of connection and configuration of a circuit unit where internal deployment of LSI can be reconfigured can be used.

It can be understood that the above implementations are exemplary implementations adopted in order to describe principles of the present disclosure. However, the present disclosure is not limited thereto. For those ordinary skilled in the art, various modifications and improvements can be made without departing from the substance and spirit of the present disclosure. These modifications and improvements can also be deemed as falling into the protection scope of the present disclosure.

## Claims

1. A server for providing feedback on a user's mark on a file, comprising:
a transmitter, configured to transmit a file to be marked to a terminal of the user in response to a command for requesting the file by the user;
a receiver, configured to receive a marked result of the user from the terminal; and
a processor, configured to provide feedback on accuracy of the marked result of the user according to a reference factor;
wherein the file is marked by the user based on at least one evaluation item, and the marked result includes a marked value corresponding to each of the at least one evaluation item.

2. The server according to claim 1, wherein the file is an electronic carrier of an artwork.

3. The server according to claim 2, wherein the reference factor comprises a system score, and the processor is further configured to:
obtain identifying information in the electronic carrier of the artwork to be marked;
determine a reference artwork of a same type as the artwork to be marked according to the identifying information, wherein each of the at least one evaluation item of the reference artwork has a predetermined reference value;
score the marked value of the artwork to be marked according to the predetermined reference value of the reference artwork, to obtain the system score.

4. The server according to claim 3, wherein the identifying information comprises at least one of an author name, a classification of work category, a classification of work style and analysis of work content.

5. The server according to claim 4, wherein the artwork to be marked and the reference artwork are painting works, and the analysis of work content comprises: brush stroke delicateness, a number and types of colors, and color usage type determined by chromaticity values.

6. The server according to claim 3, wherein the electronic carrier of the reference artwork is stored in a local repository, or the reference artwork is obtained from a remote cloud.

7. The server according to claim 2, wherein the reference factor comprises at least one of market price of the artwork to be marked, and expert score for the marked result.

8. The server according to claim 7, wherein the artwork is a painting work, and
when the reference factor comprises at least the expert score for the marked result, the at least one evaluation item comprises at least one of painting color usage and painting brush stroke delicateness,
the marked value comprises a first marked value representing the painting color usage and a second marked value representing the painting brush stroke delicateness,
the expert score comprises at least one of a first evaluation score corresponding to the first marked value and a second evaluation score corresponding to the second marked value.

9. The server according to claim 7, wherein the processor is further configured to:
when the reference factor comprises both the market price of the artwork to be marked and the expert score, the market price of the artwork to be marked and the expert score are weighted, to determine the accuracy of the marked result of the user.

10. The server according to any one of claims 2 to 9, wherein the processor is further configured to:
remove prompting information in the electronic carrier of an initial artwork to obtain the electronic carrier of the artwork to be marked, and provide the electronic carrier of the artwork to be marked to the transmitter, wherein the prompting information comprises at least author information of the initial artwork.

11. The server according to any one of claims 2 to 9, wherein the electronic carrier of the artwork comprises a picture and/or a video for the artwork.

12. A method for providing feedback on a user's mark on a file, comprising:
transmitting a file to be marked to a terminal of the user, in response to a command for requesting the file by the user;
receiving a marked result of the user from the terminal; and
providing feedback on accuracy of the marked result of the user according to a reference factor;
wherein the file is marked by the user based on at least one evaluation item, and the marked result includes a marked value corresponding to each of the at least one evaluation item.

13. The method according to claim 12, wherein the file is an electronic carrier of an artwork.

14. The method according to claim 13, wherein the reference factor comprises a system score, and the method further comprises:
obtaining identifying information in the electronic carrier of the artwork to be marked;
determining a reference artwork of a same type as the artwork to be marked according to the identifying information, wherein each of the at least one evaluation item of the reference artwork has a predetermined reference value;
scoring the marked value of the artwork to be marked according to the predetermined reference value of the reference artwork, to obtain the system score.

15. The method according to claim 14, wherein the identifying information comprises at least one of an author name, a classification of work category, a classification of work style and analysis of work content.

16. The method according to claim 15, wherein the artwork to be marked and the reference artwork are painting works, and the analysis of work content comprises brush stroke delicateness, a number and types of colors and color usage type determined by chromaticity values.

17. The method according to claim 14, wherein the electronic carrier of the reference artwork is stored in a local repository, or the reference artwork is obtained from a remote cloud.

18. The method according to claim 13, wherein the reference factor comprises at least one of market price of the artwork to be marked, and expert score for the marked result.

19. The method according to claim 18, wherein the artwork is a painting work, and when the reference factor comprises at least the expert score for the marked result, the at least one evaluation item comprises at least one of painting color usage and painting brush stroke delicateness,
the marked value comprises a first marked value representing the painting color usage and a second marked value representing the painting brush stroke delicateness,
the expert score comprises at least one of a first evaluation score corresponding to the first marked value and a second evaluation score corresponding to the second marked value.

20. The method according to claim 18, wherein providing feedback on accuracy of the marked result of the user according to the reference factor comprises:
when the reference factor comprises both the market price of the artwork to be marked and the expert score, the market price of the artwork to be marked and the expert score are weighted to determine the accuracy of the marked result of the user.

21. The method according to any one of claims 13 to 20, wherein transmitting a file to be marked to a terminal of the user comprises:
removing prompting information in the electronic carrier of an initial artwork, to obtain the electronic carrier of the artwork to be marked, and transmit the electronic carrier of the artwork to be marked to the terminal, wherein the prompting information comprises at least author information of the initial artwork.

22. The method according to any one of claims 13 to 20, wherein the electronic carrier of the artwork comprises a picture and/or a video for the artwork.

23. A system for providing feedback on a user's mark on a file, comprising the server according to any one of claims 1 to 11 and a user terminal is configured to communicate with the server, wherein the user terminal is configured to request a file to be marked from the server, transmit a marked file to the server after the user completes marking, and receive a feedback result on the marked file from the server.

24. The system according to claim 23, wherein the reference factor comprises the expert score, the evaluation system further comprises a scoring terminal, and the scoring terminal is configured to transmit the expert score to the server.
